# EUROPEAN PATENT SPECIFICATION

(11) **EP 1 674 728 B1**
(45) Date of publication and mention of the grant of the patent: **29.02.2012**
(21) Application number: 05028404.1
(22) Date of filing: 23.12.2005
(51) Int. Cl.: F04C 2/10, F04C 15/00, F04C 2/08

(54) **Motor-mounted internal gear pump**
Innenzahnradpumpe mit integriertem Motor
Pompe à engrenage interne avec moteur intégré

(30) Priority: 24.12.2004 JP 2004372969
(43) Date of publication of application: 28.06.2006
(73) Proprietor: Hitachi, Ltd., Tokyo (JP)
(72) Inventor: Kameya, Hirotaka, c/o Hitachi, Ltd., Chiyoda-ku Tokyo 100-8220 (JP); Nakanishi, Masato, c/o Hitachi, Ltd., Chiyoda-ku Tokyo 100-8220 (JP); Sato, Eiji, c/o Hitachi, Ltd., Chiyoda-ku Tokyo 100-8220 (JP); Yanagase, Yuuichi, c/o Hitachi, Ltd., Chiyoda-ku Tokyo 100-8220 (JP); Aizawa, Kouji, c/o Hitachi, Ltd., Chiyoda-ku Tokyo 100-8220 (JP)
(74) Representative: Beetz & Partner

(56) References cited:
- EP-A- 1 181 453
- EP-A- 1 600 635
- EP-A1- 0 457 490
- EP-A2- 1 566 545
- BE-A- 483 857
- GB-A- 1 542 618
- JP-A- 2003 129 966
- JP-A- 2004 232 578
- US-A- 2 339 966
- PATENT ABSTRACTS OF JAPAN vol. 015, no. 039 (M-1075), 30 January 1991 (1991-01-30) -& JP 02 277983 A (NIKKISO CO LTD), 14 November 1990 (1990-11-14)

## Description

### FIELD OF THE INVENTION

The present invention relates to a motor-mounted internal gear pump and electronic device.

A motor-mounted internal gear pump of the kind as referred to in the preamble portion of patent claim 1 is known from JP 02277983.

### BACKGROUND OF THE INVENTION

Internal gear pumps have long been known as pumps which discharge sucked liquid against pressure and particularly have been popular as hydraulic source pumps or oil feed pumps.

An internal gear pump includes, as main active components, a spur gear type inner rotor with teeth on its outer periphery, and an annular outer rotor with teeth on its inner periphery which has almost the same width as the inner rotor. A casing, which has a flat inner surface facing both side faces of these rotors with a small gap, is provided to house the rotors. The number of teeth of the inner rotor is usually one smaller than that of the outer rotor. The rotors rotate with their teeth engaged with each other, like power transmission gears. As the tooth groove area changes with this rotation, the liquid trapped in the tooth grooves is taken in or out so that the function as a pump is performed. When one of the inner and outer rotors is driven, the other rotor, engaged with it, rotates as well. Since the center of rotation is different between the rotors, each rotor must be pivotally supported in a rotatable manner individually. The casing at least has one hole called a suction port and one hole called a discharge port which both open to flow channels communicated with the outside. The suction port is communicated with a tooth groove whose volume increases and the discharge port is communicated with a tooth groove whose volume decreases. Typically, the outer rotor shape includes an arc and the inner rotor shape has a trochoid curve.

Since the internal gear pump rotates with its inner rotor and outer rotor engaged, when one rotor is driven, the other rotor rotates as well. When a motor is integral with the outer periphery of the pump and the rotator of the motor is fixed on the outer rotor for the motor to drive the outer rotor, this structure can be shorter than a structure in which the pump and the motor are arranged in series along the axial direction and is thus suitable for a compact pump.

One example of this type of internal gear pump is the one disclosed in Japanese Patent Laid-Open No. H2 (1990)-277983 (Patent Document 1). The internal gear pump described in Patent Document 1 has an internal gear which combines an outer gear having a rotor on its outer periphery to face a stator fitted in a motor casing, with a given gap inside the stator in the radial direction, and an inner gear to engage with this outer gear. Both end faces of the internal gear are liquid-tightly closed by end plates and one of the end plates has a suction port and a discharge port which communicate with the internal gear. The end plates include a front casing and a rear casing, and disc thrust bearings are disposed between the casings and both sides of the internal gear pump, and both sides of the outer gear are supported by the thrust bearings. Further, both ends of a support shaft are fixed to the casings and the inner gear is rotatably supported by the support shaft through a radial bearing. Also a liquid feed channel is provided to allow some of the pressurized liquid on the discharge side to flow through the rotor and stator to lubricate the bearings and flow back to the suction side.

### SUMMARY OF THE INVENTION

However, in the internal gear pump described in Patent Document 1, the inner gear is axially supported by the support shaft with an inner gear bearing eccentric to the outer gear and the support shaft is fitted to two thrust bearings eccentrically to the outer gear bearing. In this structure, when the two thrust bearings are fitted at different angles, the outer surface of one thrust bearing and that of the other thrust bearing are imbalanced. In the outer rotor supported by the two thrust bearings imbalanced in this way, friction resistance would increase and in an extreme case, rotation of the outer rotor could be difficult.

The internal gear pump described in Patent Document 1 uses a pump casing which is composed of two thrust bearings, a front casing, a rear casing and a stator can. This structure requires fabrication and assembly of many parts, which leads to rise in cost and deterioration in reliability due to the use of many anti-leak seals.

Besides, in the pump described in Patent Document 1, the distance between the two thrust bearings is restricted by the distance between the front casing and rear casing at both sides thereof and the distance between the front casing and rear casing is restricted by the axial length of the stator can. In this structure, it is difficult to accurately control the distance between the portions of the two thrust bearings which face the inner gear and the outer gear and the friction resistance between the inner gear and outer gear and the two thrust bearings would increase during rotation and in an extreme case, their rotation could be difficult.

JP 02277983 discloses a motor-mounted internal gear pump comprising: a pump which sucks in and discharges liquid, and a motor which drives the pump, the pump including: an inner rotor with teeth on its outer surface; an outer rotor with teeth on its inner surface to engage with the teeth of the inner rotor; a pump casing which houses both the rotors; and an inner rotor support shaft which pivotally supports the inner rotor, and the motor including: a rotator, located inside the pump casing, which drives the outer rotor; and a stator, located outside the pump casing, which rotates the rotator, the pump casing including: two casing members which are disposed in a way to face both end faces of the outer rotor and the inner rotor; an outer rotor bearing, located on the two casing members, which pivotally supports both sides of the outer rotor in the axial direction, wherein the inner rotor support shaft, which is separate from the two casing members, has an inner rotor bearing eccentric to the outer rotor to support the inner rotor pivotally in a rotatable manner and fitting shafts provided on both sides of the inner rotor bearing and fitted into fitting holes in the two casing members.

An object of the present invention is to provide a motor-mounted internal gear pump which assures high reliability while maintaining the functionality as a compact, inexpensive motor-mounted internal gear pump and electronic device which uses the same.

Another object of the present invention is to provide a motor-mounted internal gear pump which assures low cost and high reliability while maintaining the functionality as a compact, inexpensive motor-mounted internal gear pump and electronic device which uses the same.

In order to achieve the above first object, according to the invention, a motor-mounted internal gear pump comprises a pump which sucks in and discharges liquid, and a motor which drives the pump. The pump includes: an inner rotor with teeth on its outer surface; an outer rotor with teeth on its inner surface to engage with the teeth of the inner rotor; a pump casing which houses both the rotors; and an inner rotor support shaft which pivotally supports the inner rotor. The motor includes: a rotator, located inside the pump casing, which drives the outer rotor; and a stator, located outside the pump casing, which rotates the rotator. The pump casing includes: two casing members which are disposed in a way to face both side faces of the outer rotor and the inner rotor; an outer rotor bearing, located on the two casing members, which pivotally supports both sides of the outer rotor in the axial direction. Here, the inner rotor support shaft has an inner rotor bearing eccentric to the outer rotor to support the inner rotor pivotally in a rotatable manner and connects the two casing members virtually concentrically with the outer rotor bearing.

Preferred concrete structures according to the invention are as follows.

Firstly, the inner rotor support shaft is separate from the two pump casing members and is fitted to the two pump casing members on both sides of the inner rotor bearing.

Secondly, the two casing members are disposed in a way to face both the end faces of the outer rotor and the inner rotor with a small gap, and one of the two casing members is a one-piece structure of synthetic resin including a portion facing one side of the outer rotor and the inner rotor, and a cylindrical sealing portion axially stretching outward from the portion along the outer surface of the outer rotor. The rotator is fixed on the outer surface of the outer rotor inside the inner surface of the sealing portion, and the stator is located outward along the outer surface of the rotator outside the outer surface of the sealing portion.

Thirdly, the inner rotor support shaft is fitted to the two casing members by fitting its fitting shaft into fitting holes in the two casing members; one end of the fitting shaft has an anti-rotation flat surface and is fitted so as to engage with an anti-rotation flat surface of a fitting hole of the casing member; and the outer surfaces of the two casing members are fixed.

Fourthly, the outer rotor has annular overhangs protruding from both its outer end faces along the axial direction and the two casing members are integral with the outer rotor bearing.

Fifthly, the inner rotor support shaft has an eccentric bearing eccentric to the outer rotor and, on both end faces of the eccentric bearing, buffer discs which are virtually concentric with the fitting shaft and have a smaller diameter than the eccentric bearing; and the distance between the end faces of the buffer discs is larger than the axial length of the outer rotor and the inner rotor to enable the two casing members to contact the end faces of the buffer discs.

Sixthly, the fitting shaft diameter of the inner rotor support shaft is smaller than the diameter of the inner rotor bearing and the axial size of the inner rotor bearing is larger than the axial length of the outer rotor and the inner rotor to enable the two casing members to contact the end faces of the inner rotor bearing.

In order to achieve the above objects, according to another aspect of the invention, an electronic device is provided incorporating the motor-mounted internal gear pump according to any of the first to third aspects.

According to the present invention, it is possible to provide a motor-mounted internal gear pump which assures high reliability while maintaining the functionality as a compact, inexpensive motor-mounted internal gear pump and electronic device which incorporates the same.

According to the present invention, it is possible to provide a motor-mounted internal gear pump which assures more inexpensiveness and higher reliability while maintaining the functionality as a compact, inexpensive motor-mounted internal gear pump and electronic device which incorporates the same.

### BRIEF DESCRIPTION OF THE DRAWINGS

The invention will be more particularly described with reference to the accompanying drawings, in which:
Fig.1 is a sectional side view of a motor-mounted internal gear pump according to a first embodiment of the present invention;
Fig.2 is a sectional front view of the motor-mounted internal gear pump according to the first embodiment;
Fig. 3 is an exploded perspective view of the pump mechanism of Fig. 1;
Fig.4 is an explanatory view of electronic device provided with a cooling system having the motor-mounted internal gear pump of Fig.1;
Figs.5A and 5B are schematic views concerning a bearing surface concentricity error caused by rotational phase difference between the front casing and the rear casing, where Fig. 5A illustrates the effect of such rotational phase error in the first embodiment and Fig. 5B illustrates that in the conventional structure;
Figs. 6A and 6B schematically show a deformation which could occur when the fitting force of the central shaft of a motor-mounted internal gear pump is strong, where Fig.6A illustrates the shaft fitting condition in the first embodiment and Fig.6B illustrates that in the conventional structure; and

### DETAILED DESCRIPTION OF THE PREFERRED EMBODIMENTS

Next, preferred embodiments of the present invention will be described referring to the accompanying drawings. In all the drawings that illustrate the preferred embodiments, the same reference numerals designate the same or equivalent elements.

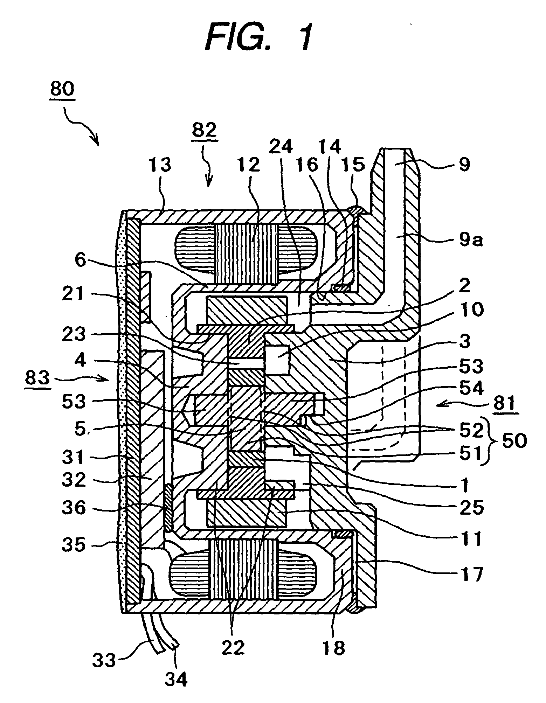

A motor-mounted internal gear pump according to the first embodiment of the present invention and electronic device which incorporates the same will be described referring to Figs. 1 to 6.

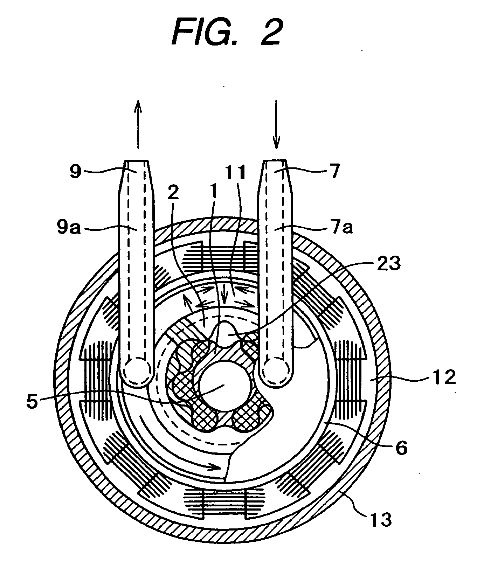

First, the general structure of a motor-mounted internal gear pump 80 according to the first embodiment will be described referring to Figs.1 and 2. Fig.1 is a sectional side view of the motor-mounted internal gear pump 80 according to the first embodiment and Fig.2 is a sectional front view of the motor-mounted internal gear pump 80 according to the first embodiment.

The pump 80 is a motor-mounted internal gear pump which is mainly composed of a pump part 81, a motor part 82 and a control part 83. The whole pump 80 is thin-shaped where the radial size of the pump 80 is larger than its axial size.

The pump part 81 includes an inner rotor 1, an outer rotor 2, a front casing 3, a rear casing 4 and an internal shaft 5. The front casing 3 and the rear casing 4 are members which constitute a pump casing and the rear casing 4 includes a sealing portion 6, a flange 18 and a cover 13. The internal shaft 5 is a shaft for supporting the inner rotor and separate from the front casing 3 and the rear casing 4.

The inner rotor 1 is similar in shape to a spur gear and has trochoidal teeth on its outer surface. Strictly speaking the tooth surface is slightly angled in the axial direction, making an angle called a "draft angle" which helps drafting in injection molding. Also, the inner rotor 1 has a center hole with a smooth inner surface which penetrates it axially. Both end faces of the inner rotor 1 are flat and smooth and constitute sliding surfaces in combination with the flat end faces of shoulders as protrusions of the front casing 3 and rear casing 4.

The outer rotor 2 takes the form of an annular internal gear and has arched teeth where the number of teeth is one larger than the number of teeth of the inner rotor 1. As a spur gear, the teeth of the outer rotor 2 have a sectional profile which is almost constant in the axial direction; however, strictly speaking, they are slightly angled in the axial direction, namely they have an angle called a "draft angle" to facilitate drafting in injection molding. The inner rotor 1 and the outer rotor 2 are angled in opposite directions and the rotors 1 and 2 are engaged so that the inner teeth diameter of the outer rotor 2 increases in the direction in which the outer teeth diameter of the inner rotor 1 increases. This prevents the engaging surfaces of the rotors 1 and 2 from touching each other unevenly in the axial direction. Both end faces of the outer rotor 2 are flat and smooth and constitute sliding surfaces in combination with the flat end faces of the shoulders of the front casing 3 and the rear casing 4. The outer rotor 2 has almost the same width as the inner rotor 1 except its outer periphery, and the outer rotor 2 is disposed outside the inner rotor 1 in a way that both end faces of the inner rotor 1 almost coincide with those of the outer rotor 2. It is advantageous in terms of performance and reliability that the width of the inner rotor 1 is slightly larger than the width of the outer rotor 2 (for example, 20-50 µm) . An annular overhang 21, which protrudes axially from both end faces of the central part (the end faces which almost coincide with both end faces of the inner rotor 1), is formed on the outer periphery of the outer rotor 2. The inner surface of the overhang 21 is smooth and constitutes a sliding surface in combination with the outer surface of the shoulder 22.

The inner rotor 1 and the outer rotor 2 are molded from synthetic resin containing a self-lubricating material such as polyacetal (POM) resin or polyphenylene sulfide (PPS) where the problem of swelling and corrosion caused by water or an aqueous solution is negligible.

The tooth grooves of the inner rotor 1 and outer rotor 2 engaged with each other are connected one by one and neighboring tooth grooves become independent closed working cells 23. The inner rotor 1 and the outer rotor 2 are designed to rotate between the front casing 3 and the rear casing 4 while engaged with each other. An inner rotor bearing 50 of the internal shaft 5 with a smooth outer surface is fitted into the center hole of the inner rotor 1 with a small gap, and thus the inner rotor 1 is pivotally supported by the internal shaft 5 in a rotatable manner. The internal shaft 5 does not rotate because it is fixed on the front casing 3. The inner rotor bearing 50 consists of: an eccentric bearing 51 which has a core eccentric to the core of the outer rotor 2; and buffer discs 52 which are concentric with the core of the outer rotor 2.

The thin buffer disc 52 with a small sectional area (for example, 0.1-0.5 mm thick) is provided on each of the end faces of the eccentric bearing 51, located in the center of the internal shaft 5. The length of the inner rotor bearing 50 includes the thickness of the eccentric bearing 51 and the thickness of the buffer discs 52 on both sides thereof. A cylindrical fitting shaft 53 is provided outside each buffer disc 52. This fitting shaft 53 is a shaft part for fitting the internal shaft 5 into the pump casing. The buffer disc 52 and the fitting shaft 53 are concentric with each other and the buffer disc 52 and the fitting shaft 53 are eccentric to the eccentric bearing 51. The eccentricity of the buffer disc 52 and the fitting shaft 53 with respect to the eccentric bearing 51 is equal to the eccentricity of the inner rotor 1 and the outer rotor 2. The eccentric bearing 51, buffer disc 52 and fitting shaft 53 are all parts of the internal shaft 5 which are made of the same material and all integral with the internal shaft 5. An anti-rotation flat surface 54, oriented radially, is formed on one end of the fitting shaft 53 and a corresponding flat surface is formed in the bottom of a fitting hole of the front casing 3 into which the anti-rotation flat plane 54 is to be fitted. The positional relation between the front casing 3 and the internal shaft 5 is kept correct by fitting these flat surface to each other.

The internal shaft 5 functions as a structural member which connects the front casing 3 and the rear casing 4 and both ends thereof are inserted into the center fitting holes in the casings 3 and 4 and fixed there. The end face of the buffer disc 52 comes into close contact with the smooth end face of the shoulder 22 at each side and the distance between the end faces of the two shoulders 22 is equal to the bearing length.

The inner peripheral surface of the overhang 21 of the outer rotor 2 is fitted on the outer peripheral surfaces of the shoulders 22 of the front casing 3 and rear casing 4 with a small gap and both ends of the outer rotor 2 are pivotally supported by the shoulders 22 of the front casing 3 and rear casing 4 in a rotatable manner. The shoulders 22 of the front casing 3 and rear casing 4 are in a positional relation as if they originated from a single cylinder.

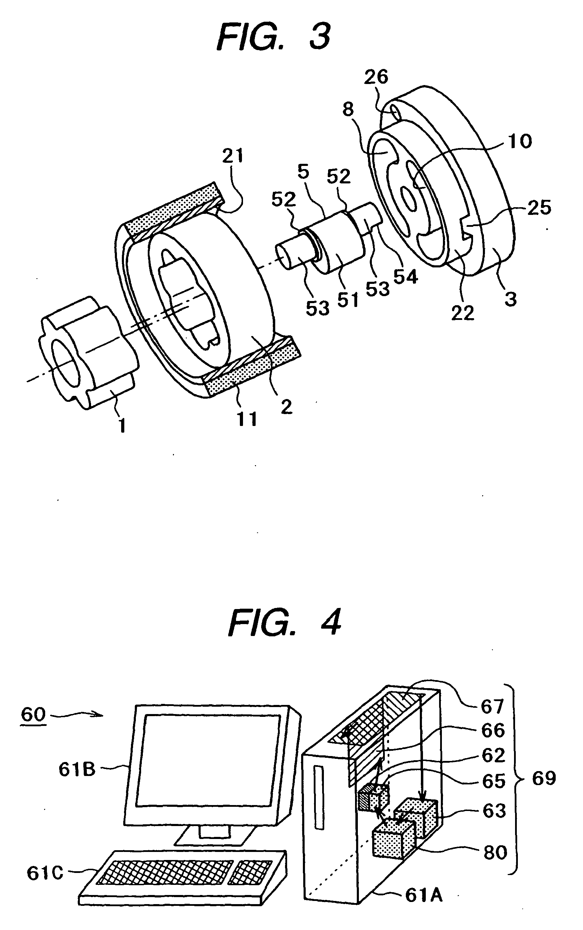

In the shoulder 22 of the front casing 3, there are a hole as a suction port 8 and a hole as a discharge port 10 in the end face (pump inner surface) opposite to the inner rotor 1 and outer rotor 2 with a small gap (see Fig. 3). The suction port 8 and the discharge port 10 are holes whose profile extends inside the tooth-base circle of the inner rotor 1 and outside the tooth-base circle of the outer rotor 2 (since the outer rotor 2 is an internal gear, its tooth-base circle diameter is larger than its tooth-tip circle diameter). The suction port 8 faces a working cell 23 whose volume increases and the discharge port 10 faces a working cell 23 whose volume decreases. When the volume of a working cell 23 is maximized, either port does not face the working cell 23 or is communicated with it only through a small sectional area.

The suction port 8 is communicated through a short L-shaped flow path 7a with a suction hole 7 which opens to the outside. On the other hand, the discharge port 10 is communicated with a discharge hole 9 which opens to the outside, through a channel from the discharge port 10 to an internal space 24 and a flow path 9a from the internal space 24 to the discharge hole 9. The internal space 24 is a space enclosed by the sealing portion 6 and the casings 3 and 4 in which a rotator 11 rotates. It is a space which is communicated with the outside only through the suction hole 7 and the discharge hole 9.

The motor part 82 consists of a rotator 11, a stator 12 and a sealing portion 6. The sealing portion 6 is shared by the pump part 81 and the motor part 82.

A rotator 11 as a cylindrical permanent magnet is fixed outside the outer rotor 2 where its width in the axial direction is almost the same as the outer rotor 2 including the overhang 21. It may be fixed there by bonding, press fitting or any other method that assures sufficient strength and reliability. The rotator 11 is designed that alternate polarities are given in the radial direction as indicated by small arrows in Fig. 2 and when viewed from the outer peripheral side, N poles and S poles are arranged alternately.

The sealing portion 6, a thin-walled cylinder, is located with a small gap from the outer periphery of the rotator 11 (for example, gap of 1 mm or less), so that the rotator 11 can rotate together with the outer rotor 2.

The stator 12 is fixed on the sealing portion 6 and the cover 13 outside the sealing portion 6 and outside the rotator 11 where the stator 12 consists of a winding around a comb-shaped iron core. Since the motor part 82, composed of the rotator 11 and the stator 12, is located outside the pump part 81, composed of the inner rotor 1 and the outer rotor 2; namely the motor part 82 and the pump part 81 are not arranged in series along the axial direction, so the pump 80 is thin and compact.

The control part 83, which is intended to control the motor part 82 , is equipped with an inverter electronic circuit for driving a brushless DC motor. Since the motor part 82 is located outside the pump part 81 as mentioned above, the control part 83 can be located on the rear side where the suction hole 7 and the discharge hole 9 of the pump part 81 are not located, and the electronic board 31 also serves as the lid for the cover 13. Therefore, the pump 80 can be small and structurally simple.

A power device 32 as a main electronic component is mounted on the closed space side of the electronic board 31 as a constituent of the inverter electronic circuit for driving a brushless DC motor. Thermally conductive grease 36 is coated between the power device 32 and the rear casing 4 to improve thermal adhesion. Power is supplied from outside to the electronic board 31, which is connected with a power line 33 for specifying a rotation speed and a rotation output line 34 for transmitting information on the rotation speed to the outside.

The brushless DC motor includes: the motor part 82 having the rotator 11 (permanent magnet) and the stator 12; and the control part 83 having the inverter electronic circuit. The structure that the rotator 11 is inside the thin-walled sealing portion 6 and the stator 12 is outside the sealing portion 6 is a motor structure called a "canned motor". Since the canned motor does not require a shaft seal, etc. and transmits the turning force to the inside of the sealing portion 6 called a "can" by the use of magnetism, the structure is suitable for a positive displacement pump which pumps out liquid through change in the volume of the working cells 23 while isolating the liquid from the outside.

Next, the positional relation among the main components of the pump part 81 will be explained referring to Fig. 3. Fig. 3 is an exploded perspective view of the pump mechanism.

The inner rotor 1 is fitted into the inside hole of the outer rotor 2 and the internal shaft 5 is inserted into the circular center hole and axially supported by the eccentric bearing 51, the diameter of which is the largest in the internal shaft 5. The outer rotor 2, including the overhang 21 protruding on both sides, is integrally fitted to the cylindrical rotator 11 which covers its outer periphery. The inner surface of the overhang 21 is fitted to the shoulders 22 as parts of the front casing 3 and the rear casing 4 with a gap and functions as a sliding bearing. As a consequence, both sides of the outer rotor 2 are supported by the front casing 3 and the rear casing 4.

The suction port 8 and the discharge port 10 are formed on the circular end face of the front casing 3, facing the rotors 1 and 2. The suction port 8 is directly connected with the suction hole 7 communicated with the outside. The discharge port 10 is communicated with the internal space 24 of the sealing portion 6 through a side hole 25 made in the side face of the shoulder 22. Furthermore, there is a hole path 26 from the internal space 24, which opens to the discharge hole 9.

Next, how the pump 80 works will be explained referring to Figs.1 to 3.

When 12 V DC power is given to the power line 33 to supply electric current to the motor drive circuit of the control part 83, electric current flows through the power device 32 to the stator 12. This starts the motor part 82 and controls it to rotate it at a specified rotation speed. Since the power device 32 outputs rotation information on the rotator 11 as a pulse signal through the rotation output line 34, an higher-level control apparatus which receives this signal can confirm the operating condition of the pump 80.

As the motor rotator 11 rotates, the outer rotor 2, combined with it also rotates; as the rotation is transmitted like an ordinary internal gear, the inner rotor 1, engaged with it, also rotates. The volume of working cells 23 formed in the tooth grooves of the two rotors 1 and 2 increases or decreases as the rotors 1 and 2 rotate. As shown in Fig. 2, when the teeth of the inner rotor 1 and outer rotor 2 are engaged deepest, the volume of the working cell 23 at the bottom is the minimum and the volume of the working cell 23 at the top is the maximum. Hence, when the rotors rotate counterclockwise, or in the direction indicated by the large arrow in Fig.2, the working cells 23 in the right half move up and their volume increases, while the working cells 23 in the left half move down and their volume decreases. All the sliding parts pivotally supporting the rotors 1 and 2 are immersed in the liquid being sent and therefore their friction is small and abnormal wear does not occur.

The liquid passes through the suction hole 7 and then the suction port 8 and pours into the working cells 23 which are expanding. As the rotors rotate, the working cell 23 whose volume is maximized leaves the profile of the suction port 8 and finishes its suction process and communicates with the discharge port 10. Then, the volume of the working cell 23 begins to decrease and the liquid in the working cell 23 is discharged through the discharge port 10. The discharged liquid goes through the side hole 25 into the internal space 24 of the sealing portion 6 and cools the rotator 11 and the casing inner surface. Then the liquid goes from the internal space 24 into the hole path 26 in the front casing 3, before being sent out through the discharge hole 9.

In this embodiment, since the suction flow channel is short, the negative pressure for suction is small, which prevents cavitation. In addition, a relatively high discharge pressure is given to the inside of the sealing portion 6 to push and expand it outward and therefore even when the sealing portion 6 is thin-walled, it cannot be so deformed inward as to touch the rotator 11.

The heat of the power device 32, which must be cooled because it generates heat during operation, moves through the thermally conductive grease 36 and the wall of the rear casing 4 to the liquid flowing in the internal space 24 before being released outside. Since the liquid in the internal space 24 is in the discharge flow channel and always stirred, it can carry away the heat efficiently. Even if friction powder is generated, it does not stay; therefore there is no need to worry about pump performance deterioration or pump damage. The inside of the pump 80 is cooled efficiently as described above, a heat sink or cooling fan for cooling the power device 32 is not needed. Also, the heat generated by motor loss in the rotator 11 or the stator 12 is carried away efficiently, which prevents an abnormal temperature rise.

Next, electronic device which has the above pump 80 will be described referring to Fig.4. Fig. 4 is a perspective view showing a personal computer system configuration with a computer in its upright position. The electronic device shown in Fig. 4 is a desk top personal computer system. When a pump is used in electronic device, it is important to properly prevent leakage of the liquid being conveyed because a small liquid leak could destroy the whole electronic device. The personal computer system according to this embodiment can properly prevent leakage of the liquid being conveyed, its reliability is high.

The personal computer system 60 is mainly composed of a personal computer 61A, a display unit 61B, and a keyboard (input device) 61C. A liquid-cooling system 69 is a closed loop system housed in the personal computer 61A together with a CPU (central processing unit) 62 in which a liquid reservoir 63, a pump 80, a heat exchanger 65, a radiator plate A66 and a radiator plate B67 are connected in the order of mention by tubing. This liquid-cooling system 69 is primarily intended to carry out the heat generated by the CPU 62 in the personal computer 61A and keep the temperature rise of the CPU 62 below a prescribed level. The liquid-cooling system 69, which uses water or an aqueous solution as a heat transfer medium, features a higher heat transfer capability and lower noise than an air-cooling system, so it is suitable for cooling the CPU 62 which generates much heat.

The liquid and air are filled in the liquid reservoir 63. The liquid reservoir 63 and the pump 80 are placed side by side where the outlet of the liquid reservoir 63 and the suction hole of the pump 80 are connected by tubing. The heat exchanger 65 is bonded to the heat radiating surface of the CPU 62 through thermally conductive grease. The discharge hole of the pump 80 and the inlet of the heat exchanger 65 are communicated by tubing. The heat exchanger 65 is communicated with the heat radiating plate A66 by tubing; and the heat radiating plate A66 is communicated with the heat radiating plate B67 by tubing; and the heat radiating plate B67 is communicated with the liquid reservoir 63 by tubing. The heat radiating plate A66 and the heat radiating plate B67 are so located as to allow heat radiation from different surfaces of the personal computer 61A.

The pump 80 is connected with the power line 33 from a 12 V DC power supply usually provided in the personal computer system 60 and the rotation output line 34 is connected with the electronic circuit of the personal computer system 60 as a higher-level control apparatus.

Next, how this liquid-cooling system 69 works will be explained. As the personal computer system 60 is started, power is supplied; the pump 80 begins running and the liquid being conveyed begins circulating. The liquid is sucked from the liquid reservoir 63 into the pump 80 and pressurized by the pump 80 and sent to the heat exchanger 65. The liquid sent from the pump 80 to the heat exchanger 65 absorbs the heat emitted from the CPU 60 and the liquid temperature rises. Then, the heat of the liquid is exchanged for outside air through the heat radiating plate A66 and the heat radiating plate B67 (heat is released to the outside) and consequently the liquid temperature falls, then the liquid returns to the liquid reservoir 63. This process is repeated so that the CPU 62 is continuously cooled.

Since the pump is an internal gear pump as a kind of positive displacement pump, even if it is started in a dry (no liquid) condition, it can make the suction hole have a negative pressure. Therefore, even when the liquid comes through a tube above the liquid level inside the liquid reservoir 63 or when the pump 80 is located at a higher position than the liquid level, the pump 80 has a self-priming ability to suck in liquid without priming water. The internal gear pump 80 has a higher pressurizing ability than a centrifugal pump, etc, so it can also be used in such a condition that the liquid passes through the heat exchanger 65 and the heat radiating plates 66 and 67 and thus liquid pressure loss becomes considerable. Particularly when the heat density of the CPU 62 is high, in order to increase the heat exchange area, the flow channel inside the heat exchanger 65 must be elongated by folding it; and if that is the case, because of increased pressure loss in the liquid passing through such a channel, it would be difficult to adopt a liquid cooling system which uses a centrifugal pump, etc. On the other hand, the liquid cooling system 69 according to this embodiment can cope with such a situation.

In the liquid cooling system 69 according to this embodiment, the liquid passes through the heat radiating plates 66 and 67 just after the outlet of the heat exchanger 65 where the liquid temperature is highest, so the liquid temperature falls and the temperature of the liquid reservoir 63 and pump 80 is maintained at a relatively low level. For this reason, the internal parts in the pump 80 provide higher reliability than in a high temperature environment.

As a result of operation of the liquid cooling system 69, the temperature of each of the components through which the liquid circulates is determined and the temperature is monitored by a thermo sensor (not shown). If insufficiency of the cooling performance is confirmed by detection of a temperature above a prescribed level, a command is given to increase the rotation speed of the pump 80 to prevent an excessive temperature rise. Contrarily, if the cooling performance is too high, the rotation speed is decreased. The rotation output signal from the pump 80 is always monitored; if no rotation signal is sent and there is an abnormal change in the liquid temperature, the pump 80 is considered to be out of order and the personal computer system 60 enters an emergency mode. In the emergency mode, a fatal hardware damage is prevented by taking minimum necessary steps such as decreasing the CPU speed and saving current program data.

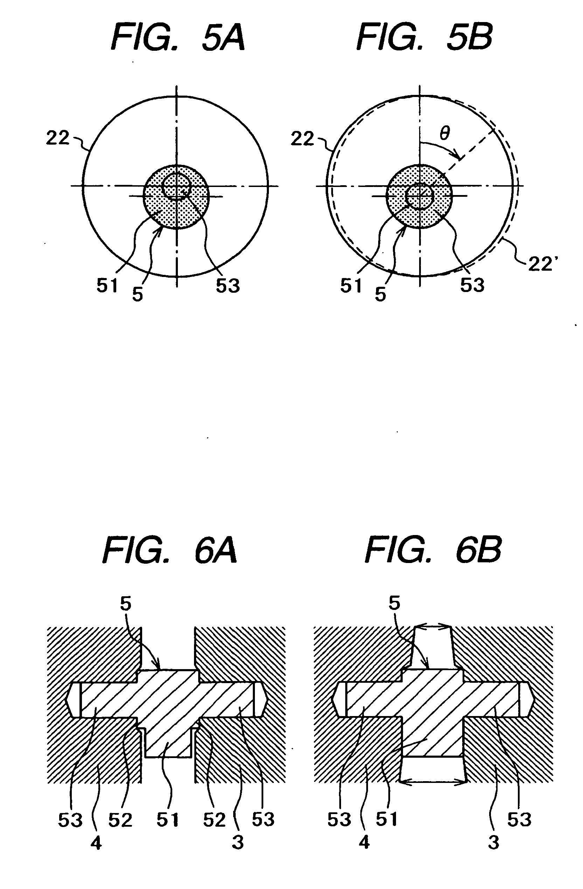

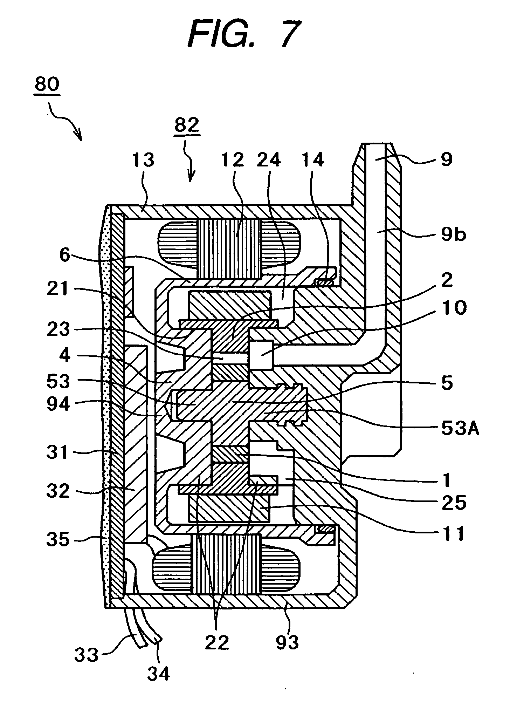

Next, an explanation will be given of positioning accuracy in coupling the internal shaft 5 with the casings 3 and 4, referring to Figs.5A, 5B, 6A and 6B. Figs.5A and 5B schematically show the internal shaft 5 and the outer peripheral bearing surface of the shoulder 22 (or inner peripheral surface of the overhang 21 of the outer rotor 2) as viewed axially. Figs.6A and 6B schematically show the internal shaft 5 fitted into the casings 3 and 4.

First, referring to Figs. 5A and 5B, an explanation will be given of the influence of the rotational phase accuracy of the front casing 3 and rear casing 4 on the accuracy of the outer peripheral bearing surfaces of the shoulders 22.

According to this embodiment, as shown in Fig.5A, the axis center of the fitting shaft 53 is concentric with that of the outer peripheral bearing surfaces of the shoulders 22. Hence, even if there is a rotational phase error between the front casing 3 and rear casing 4, the center is fixed and the concentricity of the two shoulder cylindrical surfaces is maintained and they coincide in shape and position as if they originated from a cylinder.

On the other hand, in the conventional structure as seen in the cited prior art, the eccentric bearing 51 and fitting shaft 53 of the internal shaft 5 are concentric or not separated by a step or the like, as shown in Fig.5B. In this case, if the rotational phase accuracy between the front casing 3 and rear casing 4 is poor and the front casing 3 and rear casing 4 are fixed at different angles, one shoulder 22' does not coincide with the other shoulder 22, as indicated in Fig.5B by the broken line representing the profile of the shoulder 22'. If the outer rotor 2 is pivotally supported by the shoulder 22 inplace and the shoulder 22' out of place, friction resistance would be larger, and in an extreme case, it could not rotate. For this reason, the structure according to this embodiment is advantageous in maintaining the accuracy of concentricity of the two shoulders in order to ensure smooth rotation of the outer rotor 2.

Next, the effect of the buffer discs 52 provided on the internal shaft 5 will be described referring to Figs.6A and 6B. In the pump according to this embodiment, as shown in Fig. 6A, the fitting shaft 53, located on the end faces of the buffer discs 52 on both sides of the internal shaft 5, is inserted into the fitting holes of the front casing 3 and rear casing 4. These two casings 3 and 4 are bonded with an adhesive material 15 in a way to decrease the gap on the flange surface 17 near the outer periphery and a force which brings the two casings 3 and 4 closer to each other is generated here. In short, the casings 3 and 4 are pushed against the internal shaft 5. Due to this force, the areas around the fitting holes of the casings 3 and 4 are elastically deformed and the buffer discs 52 slightly sink down in the casing end faces. The buffer discs 52, in contact with the casing end faces, are doughnut-shaped and concentric with the fitting shaft 53; and they sink down straight, or without being angled.

By contrast, if the buffer discs 52 are not provided, as shown in Fig.6B, since the eccentric bearing 51 is eccentric to the fitting shaft 53, the area of contact with the casing end faces would differ in different directions and also the sinking depth would differ. This difference might result in an inclination of the whole casings and as indicated by the arrows in Fig.6B, the width of the shoulder end faces would not be constant and the shoulder cylindrical surfaces would not coincide. As a consequence, friction resistance in rotation of the inner rotor 1 and the outer rotor 2 would increase and in an extreme case, their rotation would be difficult. One solution to this problem may be to increase the distance between the shoulder end faces to enable the rotors to continue rotating; however, in that case, performance deterioration caused by the increased distance will be unavoidable.

Therefore, in this embodiment, thanks to the buffer discs 5 provided on the internal shaft 5, the rotors rotate properly while high performance is maintained.

## Claims

1. A motor-mounted internal gear pump (80) comprising:
a pump (81) which sucks in and discharges liquid, and
a motor (82) which drives the pump (81),
the pump (81) including:
an inner rotor (1) with teeth on its outer surface;
an outer rotor (2) with teeth on its inner surface to engage with the teeth of the inner rotor (1) ;
a pump casing (3, 4) which houses both rotors (1, 2); and
an inner rotor support shaft (5) which pivotally supports the inner rotor (1),
the motor (82) including:
a rotator (11), located inside the pump casing (3, 4), which drives the outer rotor (2); and
a stator (12), located outside the pump casing (3, 4), which rotates the rotator (11),
the pump casing (3, 4) including:
two casing members (3, 4) which are disposed in a way to face both end faces of the outer rotor (2) and the inner rotor (1);
an outer rotor bearing, located on the two casing members (3, 4), which pivotally supports both sides of the outer rotor in the axial direction,
wherein the inner rotor support shaft (5), which is separate from the two casing members (3 , 4) , has an inner rotor bearing (50) eccentric to the outer rotor (2) to support the inner rotor (1) pivotally in a rotatable manner, and fitting shafts (53) provided on both sides of the inner rotor bearing (50) and fitted into fitting holes in the two casing members (3, 4) , **characterized in that** said fitting shafts (53) connect the two casing members (3, 4) through the inner rotor support shaft (5) concentrically with the outer rotor bearing.

2. The motor-mounted internal gear pump described in claim 1,
wherein:
the two casing members (3, 4) are disposed in a way to face both the end faces of the outer rotor (2) and the inner rotor (1) with a small gap; and
oneofthetwocasingmembers (3, 4) is a one-piece structure of synthetic resin including a portion facing one side of the outer rotor (2) and the inner rotor (1), and a cylindrical sealing portion (6) axially stretching from the portion along the outer surface of the outer rotor (2);
the rotator (11) is fixed on the outer surface of the outer rotor (2) inside the inner surface of the sealing portion (6); and
the stator (12) is located along the outer surface of the rotator (11) outside the outer surface of the sealing portion (6).

3. The motor-mounted internal gear pump described in claim 1,
wherein:
one of the fitting shafts (53) has an anti-rotation flat surface (54) and is fitted so as to engage with an anti-rotation flat surface of the fitting hole formed in one of the two casing members (3, 4); and
outer portions of the two casing members (3, 4) are fixed.

4. The motor-mounted internal gear pump described in claim 1, wherein the outer rotor (2) has annular overhangs protruding from both its outer end faces along the axial direction and the two casing members (3, 4) are integral with the outer rotor bearing.

5. The motor-mounted internal gear pump described in claim 1,
wherein:
the inner rotor support shaft (5) has an eccentric bearing eccentric to the outer rotor (2) and, on both end faces of the eccentric bearing, buffer discs (52) which are concentric with the fitting shaft (53) and have a smaller diameter than the eccentric bearing (51); and
the distance between the end faces of the buffer discs (52) is larger than the axial length of the outer rotor (2) and the inner rotor (1) to enable the two casing members (3, 4) to contact the end faces of the buffer discs (52).

6. The motor-mounted internal gear pump described in claim 1,
wherein:
the diameter of the fitting shaft (53) is smaller than the diameter of the inner rotor bearing (50) ; and
the axial size of the inner rotor bearing (50) is larger than the axial length of the outer rotor (2) and the inner rotor (1) to enable the two casing members (3, 4) to contact the end faces of the inner rotor bearing (50).

7. The motor-mounted internal gear pump described in claim 2, wherein one of the two casing members (3, 4)is integral with a cylindrical cover (13) of synthetic resin which further extends from the sealing portion (6) and covers the stator (12).

8. The motor-mounted internal gear pump described in claim 1,
wherein:
the inner rotor (1) is larger in the axial direction than the outer rotor (2); and
the diameter of the fitting shaft (53) is smaller than the diameter of the inner rotor bearing (50) and the axial size of the inner rotor bearing (50) is larger than the axial length of the inner rotor (1) to enable the two casing members (3, 4) to contact the end faces of the inner rotor bearing (50).

9. Electronic device which incorporates the motor-mounted internal gear pump described in any of claims 1 to 8, as a liquid circulation source.

## Patentansprüche

1. Innenzahnradpumpe (80) mit integriertem Motor mit:
einer Pumpe (81), die eine Flüssigkeit ansaugt und abgibt, und
einem Motor (82), der die Pumpe (81) antreibt, wobei die Pumpe (81) aufweist:
einen inneren Rotor (1) mit Zähnen auf seiner äußeren Oberfläche,
einen äußeren Rotor (2) mit Zähnen auf seiner inneren Oberfläche für den Eingriff in die Zähne des inneren Rotors (1),
ein Pumpengehäuse (3, 4), welches beide Rotoren (1, 2) aufnimmt,
und
einer inneren Rotorträgerachse (5), die schwenkbar den inneren Rotor (1) trägt,
wobei der Motor (82) aufweist:
einen Rotator (11), der im Inneren des Pumpengehäuses (3, 4) angeordnet ist und den äußeren Rotor (2) antreibt und
einen Stator (12), der außerhalb des Pumpengehäuses (3, 4) angeordnet ist, der den Rotator (11) dreht,
wobei das Pumpengehäuse (3, 4) aufweist:
zwei Gehäuseteile (3, 4), die so angeordnet sind, dass sie beiden Endflächen des äußeren Rotors (2) und des inneren Rotors (1) gegenüberliegen,
ein äußeres Rotorlager, das auf den beiden Gehäuseteilen (3, 4) angeordnet ist und schwenkbar beide Seiten des äußeren Rotors in der Axialrichtung trägt,
wobei die innere Rotorträgerachse (5), die von den beiden Gehäuseteilen (3, 4) getrennt ist, ein inneres Rotorlager (50) aufweist, welches exzentrisch zu dem äußeren Rotor (2) angeordnet ist, um den inneren Rotor (1) verdrehbar zu lagern, und Montageachsen (53), die auf beiden Seiten des inneren Rotorlagers (50) angeordnet sind und in Montagelöcher in den beiden Gehäuseteilen (3, 4) eingepasst sind, **dadurch gekennzeichnet, dass** die Anschlussachsen (53) die beiden Gehäuseteile (3, 4) durch die innere Rotorträgerachse (5) konzentrisch mit dem äußeren Rotorlager verbinden.

2. Innenzahnradpumpe mit integriertem Motor nach Anspruch 1, wobei
die beiden Gehäuseteile (3, 4) so angeordnet sind, dass sie den Endflächen des äußeren Rotors (2) und des inneren Rotors (1) mit einem kleinen Spalt gegenüberliegen, und
wobei eines der beiden Gehäuseteile (3, 4) einstückig aus Kunstharz gefertigt ist und einen Bereich aufweist, der einer Seite des äußeren Rotors (2) und des inneren Rotors (1) gegenüberliegt, und wobei sich ein zylinderförmiger Dichtungsbereich (6) axial von dem Bereich entlang der äußeren Oberfläche des äußeren Rotors (2) erstreckt,
der Rotator (11) auf der äußeren Oberfläche des äußeren Rotors (2) innerhalb der inneren Oberfläche des Dichtungsbereichs (6) befestigt ist, und
der Stator (12) entlang der äußeren Oberfläche des Rotators (11) außerhalb der äußeren Oberfläche des Dichtungsbereichs (6) angeordnet ist.

3. Innenzahnradpumpe mit integriertem Motor nach Anspruch 1, wobei
eine der Montageachsen (53) eine flache Antirotationsfläche (54) aufweist und so montiert ist, dass sie mit einer flachen Antirotationsfläche des Montagelochs zusammenwirkt, welches in einem der beiden Gehäuseteile (3, 4) ausgeformt ist, und
wobei die äußeren Bereiche der beiden Gehäuseteile (3, 4) fixiert sind.

4. Innenzahnradpumpe mit integriertem Motor nach Anspruch 1, wobei der äußere Rotor (2) ringförmige Überhänge aufweist, die von dessen äußeren Endflächen in axialer Richtung überstehen, und wobei die beiden Gehäuseteile (3, 4) mit dem äußeren Rotorlager einstückig ausgebildet sind.

5. Innenzahnradpumpe mit integriertem Motor nach Anspruch 1, wobei
die innere Rotorträgerachse (5) ein exzentrisches Lager aufweist, welches exzentrisch zu dem äußeren Rotor (2) ist, und auf beiden Endflächen des exzentrischen Lagers Pufferscheiben (52) angeordnet sind, die konzentrisch zu der Montageachse (53) sind und einen kleineren Durchmesser als das exzentrische Lager (51) aufweisen, und
der Abstand zwischen den Endflächen der Pufferscheiben (52) größer ist als die axiale Länge des äußeren Rotors (2) und des inneren Rotors (1), um es den beiden Gehäuseteilen (3, 4) zu ermöglichen, in Kontakt mit den Endflächen der Pufferscheiben (52) zu stehen.

6. Innenzahnradpumpe mit integriertem Motor nach Anspruch 1, wobei
der Durchmesser der Montageachse (53) kleiner ist als der Durchmesser des inneren Rotorlagers (50), und die axiale Größe des inneren Rotorlagers (50) größer ist als die axiale Länge des äußeren Rotors (2) und des inneren Rotors (1), um es den beiden Gehäuseteilen (3, 4) zu ermöglichen, in Kontakt mit den Endflächen des inneren Rotorlagers (50) zu stehen.

7. Innenzahnradpumpe mit integriertem Motor nach Anspruch 2, wobei eines der beiden Gehäuseteile (3, 4) einstückig mit einer zylinderförmigen Abdeckung (13) aus Kunstharz ausgebildet ist, die sich von dem Dichtbereich (6) aus erstreckt und den Stator (12) abdeckt.

8. Innenzahnradpumpe mit integriertem Motor nach Anspruch 1, wobei
der innere Rotor (1) in Axialrichtung größer ist als der äußere Rotor (2), und wobei der Durchmesser der Montageachse (53) kleiner ist als der Durchmesser des inneren Rotorlagers (50), und die axiale Größe des inneren Rotorlagers (50) größer ist als die axiale Länge des inneren Rotors (1), um es den beiden Gehäuseteilen (3, 4) zu ermöglichen, in Kontakt mit den Endflächen des inneren Rotorlagers (50) zu stehen.

9. Elektronische Vorrichtung, welche eine Innenzahnradpumpe mit integriertem Motor nach einem der Ansprüche 1 bis 8 als eine Quelle einer zirkulierenden Flüssigkeit aufweist.

## Revendications

1. Pompe à engrenage interne avec moteur intégré (80) comprenant :
une pompe (81) qui aspire et évacue un liquide, et
un moteur (82) qui entraîne la pompe (81),
la pompe (81) incluant :
un rotor interne (1) muni de dents sur sa surface externe ;
un rotor externe (2) muni de dents sur sa surface interne qui s'engagent avec les dents du rotor interne (1) ;
un corps de pompe (3, 4) qui renferme les deux rotors (1, 2) ; et
un arbre de support du rotor interne (5) qui supporte de manière pivotante le rotor interne (1),
le moteur (82) incluant :
un rotateur (11), situé à l'intérieur du corps de pompe (3, 4), qui entraîne le rotor externe (2) ; et
un stator (12), situé à l'extérieur du corps de pompe (3, 4), qui fait tourner le rotateur (11),
le corps de pompe (3, 4) incluant :
deux éléments de corps (3, 4) qui sont disposés de manière à faire face aux faces extrêmes du rotor externe (2) et du rotor interne (1) ;
un palier de rotor externe, situé sur les deux éléments de corps (3, 4), qui supporte de façon pivotante les deux côtés du rotor externe dans la direction axiale,
dans lequel l'arbre de support du rotor interne (5), qui est séparé des deux éléments de corps (3, 4), possède un palier de rotor interne (50) excentrique par rapport au rotor externe (2) pour supporter le rotor interne (1) de façon pivotante d'une manière rotative, et des arbres de fixation (53) disposés des deux côtés du palier de rotor interne (50) et fixés dans les trous de fixation dans les deux éléments de corps (3, 4), **caractérisé en ce que** lesdits arbres de fixation (53) relient les deux éléments de corps (3, 4) par le biais de l'arbre de support du rotor interne (5) de manière concentrique par rapport au palier de rotor externe.

2. La pompe à engrenage interne avec moteur intégré décrite dans la revendication 1,
dans laquelle :
les deux éléments de corps (3, 4) sont disposés de manière à faire face aux faces extrêmes du rotor externe (2) et du rotor interne (1) avec un petit espace ; et
l'un des deux éléments de corps (3, 4) est une structure monobloc en résine synthétique incluant une partie faisant face à un côté du rotor externe (2) et du rotor interne (1), et une partie d'étanchéité cylindrique (6) s'étendant axialement à partir de la partie le long de la surface externe du rotor externe (2) ;
le rotateur (11) est fixé sur la surface externe du rotor externe (2) à l'intérieur de la surface interne de la partie d'étanchéité (6) ; et
le stator (12) est situé le long de la surface externe du rotateur (11) à l'extérieur de la surface externe de la partie d'étanchéité (6).

3. La pompe à engrenage interne avec moteur intégré décrite dans la revendication 1,
dans laquelle :
l'un des arbres de fixation (53) possède une surface plate anti-rotation (54) et est fixé de manière à s'engager avec une surface plate anti-rotation du trou de fixation formé dans l'un des deux éléments de corps (3, 4) ; et
les parties externes des deux éléments de corps (3, 4) sont fixes.

4. La pompe à engrenage interne avec moteur intégré décrite dans la revendication 1, dans laquelle le rotor externe (2) possède des saillies annulaires s'étendant à partir de ses deux faces extrêmes externes le long de la direction axiale et les deux éléments de corps (3, 4) sont solidaires du palier de rotor externe.

5. La pompe à engrenage interne avec moteur intégré décrite dans la revendication 1,
dans laquelle :
l'arbre de support du rotor interne (5) possède un palier excentrique par rapport au rotor externe (2) et, sur les deux faces extrêmes du palier excentrique, des disques de butée (52) qui sont concentriques par rapport à l'arbre de fixation (53) et ont un diamètre plus petit que le palier excentrique (51), et
la distance entre les faces extrêmes des disques de butée (52) est plus grande que la longueur axiale du rotor externe (2) et du rotor interne (1) pour permettre aux deux éléments de corps (3, 4) d'entrer en contact avec les faces extrêmes des disques de butée (52).

6. La pompe à engrenage interne avec moteur intégré décrite dans la revendication 1,
dans laquelle :
le diamètre de l'arbre de fixation (53) est inférieur au diamètre du palier de rotor interne (50) ; et
la taille axiale du palier de rotor interne (50) est plus grande que la longueur axiale du rotor externe (2) et du rotor interne (1) pour permettre aux deux éléments de corps (3, 4) d'entrer en contact avec les faces extrêmes du palier de rotor interne (50).

7. La pompe à engrenage interne avec moteur intégré décrite dans la revendication 2, dans laquelle l'un des deux éléments de corps (3, 4) est solidaire d'un couvercle cylindrique (13) en résine synthétique qui s'étend également à partir de la partie d'étanchéité (6) et couvre le stator (12).

8. La pompe à engrenage interne avec moteur intégré décrite dans la revendication 1,
dans laquelle :
le rotor interne (1) est plus grand dans la direction axiale que le rotor externe (2) ; et
le diamètre de l'arbre de fixation (53) est inférieur au diamètre du palier de rotor interne (50) et la taille axiale du palier de rotor interne (50) est plus grande que la longueur axiale du rotor interne (1) pour permettre aux deux éléments de corps (3, 4) d'entrer en contact avec les faces extrêmes du palier de rotor interne (50).

9. Dispositif électronique qui comprend la pompe à engrenage interne avec moteur intégré décrite dans l'une quelconque des revendications 1 à 8, comme source de circulation de liquide.
